# EUROPEAN PATENT APPLICATION

(11) **EP 3 936 992 A1**
(43) Date of publication of application: **12.01.2022**
(21) Application number: 20772726.4
(22) Date of filing: 13.03.2020
(51) Int. Cl.: G06F 3/0488

(54) **CONTROL METHOD AND ELECTRONIC DEVICE**

(30) Priority: 18.03.2019 CN 201910204988
(71) Applicant: Honor Device Co., Ltd., Shenzhen, Guangdong 518040 (CN)
(72) Inventor: LI, Yu, Shenzhen, Guangdong 518129 (CN); XU, Jun, Shenzhen, Guangdong 518129 (CN); ZHI, Qucheng, Shenzhen, Guangdong 518129 (CN)
(74) Representative: Roth, Sebastian
(86) International application number: PCT/CN2020/079257
(87) International publication number: WO 2020/187157

(57) **Abstract**

Disclosed are a control method and an electronic device. The method is applied to the electronic device. The electronic device includes a touchscreen. The method includes: detecting, by the electronic device, a first operation of a user (310); obtaining, by the electronic device, a current application scene of the electronic device in response to the first operation (320); adjusting, by the electronic device, a response time when determining that the application scene meets a first preset condition, where the response time is a response time for the touchscreen to enter an idle mode from an active mode (330); and/or adjusting, by the electronic device, a quantity of discarded sampling points when determining that the application scene meets a second preset condition (340). According to the control method, the electronic device can automatically adjust the response time and the quantity of discarded sampling points, helping reduce operation complexity for a user, improve operation efficiency for the user, increase a degree of intelligence of the electronic device, and improve user experience.

## Description

This application claims priority to Chinese Patent Application No. 201910204988.6, filed with the China National Intellectual Property Administration on March 18, 2019 and entitled "CONTROL METHOD AND ELECTRONIC DEVICE", which is incorporated herein by reference in its entirety.

### TECHNICAL FIELD

This application relates to the field of electronic devices, and more specifically, to a control method and an electronic device.

### BACKGROUND

With the explosive development of the mobile game industry, the gaming experience of some large-scale games (for example, Strike of Kings) has become an important reference factor for mobile phone users to select mobile phones. In the current mobile phone gaming experience, the game frame rate is unstable, sudden heavy scenes (for example, a team battle of Strike of Kings) freeze, the mobile phone heats up severely, and the gaming experience fluctuates sharply after frequency restriction due to overheating. When a user wants to improve user experience in a game scene, the user needs to manually set touch parameters and manually switch the touch parameters when entering different application scenes. This may cause problems such as complex operations and lead to poor user experience.

### SUMMARY

This application provides a control method and an electronic device, so as to help improve operation efficiency for a user, increase a degree of intelligence of the electronic device, and improve user experience.

According to a first aspect, a control method is provided. The method is applied to the electronic device. The electronic device includes a touchscreen. The method includes: the electronic device detects a first operation of a user; the electronic device obtains a current application scene of the electronic device in response to the first operation; the electronic device determines a response time as a first time when determining that the application scene meets a first preset condition, where the response time is a response time for the touchscreen to enter an idle mode from an active mode; and/or the electronic device adjusts a quantity of discarded sampling points as a first quantity when determining that the application scene meets a second preset condition, where the discarded sampling point is a sampling point discarded when the electronic device performs sampling on the touchscreen;
the electronic device determines the response time as a second time when determining that the application scene meets a third preset condition; and/or the electronic device determines the quantity of discarded sampling points as a second quantity when determining that the application scene meets a fourth preset condition, where the first time is different from the second time, the first quantity is different from the second quantity, the first preset condition is different from the third preset condition, and the second preset condition is different from the fourth preset condition.

According to the control method in embodiments of this application, when the current application scene of the electronic device meets different preset conditions, the electronic device can automatically determine different response times and different quantities of discarded sampling points, helping reduce operation complexity for a user, improve operation efficiency for the user, increase a degree of intelligence of the electronic device, and improve user experience.

With reference to the first aspect, in a possible implementation of the first aspect, the method further includes: the electronic device determines a suppression distance as a first distance when determining that the current application scene meets a fifth preset condition, where the suppression distance is a suppression distance in a click-to-slide suppression algorithm; and the electronic device determines the suppression distance as a second distance when determining that the current application scene meets a sixth preset condition, where the fifth preset condition is different from the sixth preset condition, and the first distance is different from the second distance.

In some possible implementations, the electronic device determines the suppression distance as a first distance when determining that the current application scene meets a fifth preset condition; and the electronic device determines the suppression distance as a second distance when determining that the current application scene meets a sixth preset condition, where the fifth preset condition is different from the sixth preset condition, and the first distance is different from the second distance.

According to the control method in the embodiments of this application, when the current application scene of the electronic device meets different preset conditions, the electronic device can automatically determine the suppression distance, helping reduce operation complexity for a user, improve operation efficiency for the user, increase a degree of intelligence of the electronic device, and improve user experience.

With reference to the first aspect, in a possible implementation of the first aspect, the first preset condition is the same as the second preset condition, and the first preset condition includes: the current application scene is at least one of the following scenes: a game application scene, gesture navigation, an in-vehicle scene, a social application scene, a voice call scene, handwriting input, or stylus input.

According to the control method in the embodiments of this application, when the current application scene of the electronic device meets a specific preset condition, the electronic device can adjust both the response time and the quantity of discarded sampling points, helping reduce operation complexity for a user, improve operation efficiency for the user, increase a degree of intelligence of the electronic device, and improve user experience.

With reference to the first aspect, in a possible implementation of the first aspect, the first preset condition and the second preset condition are that the application scene is a game application scene, and the third preset condition and the fourth preset condition are that when the application scene is not a game application scene, the first time is greater than the second time, and the first quantity is less than the second quantity.

According to the control method in the embodiments of this application, the response time of the electronic device in the game application scene is greater than the response time in the non-game scene; the quantity of discarded sampling points in the game scene is less than the quantity of discarded sampling points in the non-game scene; and a response speed of the electronic device in the game scene is higher and helps avoid a data delay, thereby helping improve user experience in the game application scene.

With reference to the first aspect, in a possible implementation of the first aspect, the first preset condition includes that the current application scene is a preset application scene, and a message corresponding to the first operation includes first preset interface information; the second preset condition includes that the current application scene is the preset application scene, and the message corresponding to the first operation includes second preset interface information, where the first preset interface information is different from the second preset interface information.

According to the control method in the embodiments of this application, in the same application scene, the electronic device can automatically adjust the response time, the quantity of discarded sampling points, and the suppression distance based on different operations of the user, helping reduce operation complexity for the user, improve operation efficiency for the user, increase a degree of intelligence of the electronic device, and improve user experience.

In some possible implementations, the first preset condition includes that the current application scene is a preset application scene, and load of the application scene is within a first load range; the second preset condition includes that the current application scene is the preset application scene, and the load of the application scene is within a second load range, where the first load range is different from the second load range.

In some possible implementations, the load of the application scene may be CPU usage of the application scene.

With reference to the first aspect, in a possible implementation of the first aspect, the first operation is a click operation that is performed by the user on a desktop of the electronic device and that is detected by the electronic device; or the first operation is an operation of the user for indicating to switch from another application scene to the application scene.

With reference to the first aspect, in a possible implementation of the first aspect, the electronic device is an electronic device configured with an Android triple buffering mechanism, and the method further includes: determining that the current application scene meets the sixth preset condition, and determining that a first frame in an application rendering buffer queue is in a queued state, where the first frame is a frame corresponding to the first operation; sending the first frame to a layer composition buffer for composition processing; and displaying an image obtained through the composition processing.

According to the control method in the embodiments of this application, the electronic device can perform queue jumping for the first frame when determining that the current scene meets the preset scene and the first frame in the application rendering buffer queue is in the queued state. This can solve a data delay of the first frame without directly performing hardware composition (HWC), and ensure that information about some frames of a graphics stack is refreshed and sent for display in a timely manner.

According to a second aspect, a control method is provided. The method is applied to an electronic device configured with an Android triple buffering mechanism, and the electronic device includes a display. The method includes: detecting a first operation of a user; obtaining a current application scene of the electronic device in response to the first operation; determining that the application scene meets a preset condition, and determining that a first frame in an application rendering buffer queue is in a queued state, where the first frame is a frame corresponding to the first operation; in response to the first frame being in the queued state, sending the first frame to a layer composition buffer for composition processing; and displaying an image obtained through the composition processing on the touchscreen.

According to the control method in the embodiments of this application, the electronic device can perform queue jumping for the first frame when determining that the current scene meets the preset scene and the first frame in the application rendering buffer queue is in the queued state. This can solve a data delay of the first frame without directly performing hardware composition (HWC), and ensure that information about some frames of a graphics stack is refreshed and sent for display in a timely manner.

With reference to the second aspect, in a possible implementation of the second aspect, the preset condition includes: the current application scene is at least one of the following scenes: a game application scene, gesture navigation, an in-vehicle scene, a social application scene, a voice call scene, handwriting input, or stylus input.

According to a third aspect, a control method is provided. The method is applied to an electronic device. The method includes: the electronic device obtains a current application scene of the electronic device in response to a first operation; the electronic device determines a suppression distance as a first distance when determining that the application scene meets a first preset condition, where the suppression distance is a suppression distance in a click-to-slide suppression algorithm; and the electronic device determines the suppression distance as a second distance when determining that the application scene meets a second preset condition, where the first preset condition is different from the second preset condition, and the first distance is different from the second distance.

According to the control method in the embodiments of this application, when the current application scene of the electronic device meets different preset conditions, the electronic device can automatically determine the suppression distance, helping reduce operation complexity for a user, improve operation efficiency for the user, increase a degree of intelligence of the electronic device, and improve user experience.

According to a fourth aspect, the present technical solution provides a control apparatus. The apparatus is included in an electronic device, and the apparatus has a function of implementing behavior of the electronic device in the foregoing aspects and the possible implementations of the foregoing aspects. The function can be implemented by hardware, or can be implemented by hardware by executing corresponding software. The hardware or the software includes one or more modules or units corresponding to the function.

According to a fifth aspect, the present technical solution provides an electronic device, including: a touchscreen; one or more processors; a memory; a plurality of application programs; and one or more computer programs. The one or more computer programs are stored in the memory, and the one or more computer programs include instructions. When the instructions are executed by the electronic device, the electronic device is enabled to perform the control method in any possible implementation of any one of the foregoing aspects.

According to a sixth aspect, the present technical solution provides an electronic device, including one or more processors and one or more memories. The one or more memories are coupled to one or more processors, the one or more memories are configured to store computer program code, and the computer program code includes computer instructions. When the one or more processors execute the computer instructions, the electronic device is enabled to perform the control method in any possible implementation of any one of the foregoing aspects.

According to a seventh aspect, the present technical solution provides a computer storage medium, including computer instructions. When the computer instructions run on an electronic device, the electronic device is enabled to perform the control method in any possible implementation of any one of the foregoing aspects.

According to an eighth aspect, the present technical solution provides a computer program product. When the computer program product runs on an electronic device, the electronic device is enabled to perform the control method in any possible design of any one of the foregoing aspects.

### BRIEF DESCRIPTION OF DRAWINGS

FIG. 1 is a schematic structural diagram of an electronic device according to an embodiment of this application;
FIG. 2 is a structural block diagram of software of an electronic device according to an embodiment of this application;
FIG. 3 is a schematic flowchart of a control method according to an embodiment of this application;
FIG. 4 shows a group of GUL according to an embodiment of this application;
FIG. 5 shows another group of GUL according to an embodiment of this application;
FIG. 6 is another schematic flowchart of a control method according to an embodiment of this application;
FIG. 7 is a schematic block diagram of an electronic device according to an embodiment of this application; and
FIG. 8 is another schematic block diagram of an electronic device according to an embodiment of this application.

### DESCRIPTION OF EMBODIMENTS

Terms used in the following embodiments are merely intended for the purpose of describing specific embodiments, but not intended to limit this application. The terms "one", "a" and "this" of singular forms used in this specification and the appended claims of this application are also intended to include, for example, the form of "one or more", unless otherwise specified in the context clearly. It should be further understood that in the following embodiments of this application, "at least one" and "one or more" mean one, two, or more than two. The term "and/or" is used to describe an association relationship between associated objects, and indicates that three relationships may exist. For example, A and/or B may represent the following three cases: Only A exists, both A and B exist, and only B exists. A and B may be singular or plural. The character "/" generally indicates an "or" relationship between associated objects.

Referring to "one embodiment" or "some embodiments" or the like described in this specification means that one or more embodiments of this application include a specific feature, structure, or characteristic described with reference to the embodiment. Therefore, the statements "in one embodiment", "in some embodiments", "in some other embodiments", and the like appearing at different locations in this specification do not mean that these embodiments are all necessarily referred to, but mean "one or more but not all embodiments", unless otherwise specifically emphasized in other ways. The terms "include", "comprise", "have", and their variants all mean "including but not limited to", unless otherwise specifically emphasized in other ways.

The following describes an electronic device with an NFC function, a user interface used for the electronic device, and an embodiment used for using the electronic device. In some embodiments, the electronic device may be a portable electronic device that further includes another function such as a personal digital assistant function and/or a music player function, for example, a mobile phone, a tablet computer, or a wearable electronic device (for example, a smartwatch) having a wireless communication function. An example embodiment of the portable electronic device includes but is not limited to a portable electronic device using iOS^{®}, Android^{®}, Microsoft^{®}, or another operating system. The portable electronic device may alternatively be another portable electronic device such as a laptop computer (Laptop). It should be further understood that, in some other embodiments, the electronic device may not be a portable electronic device, but is a desktop computer.

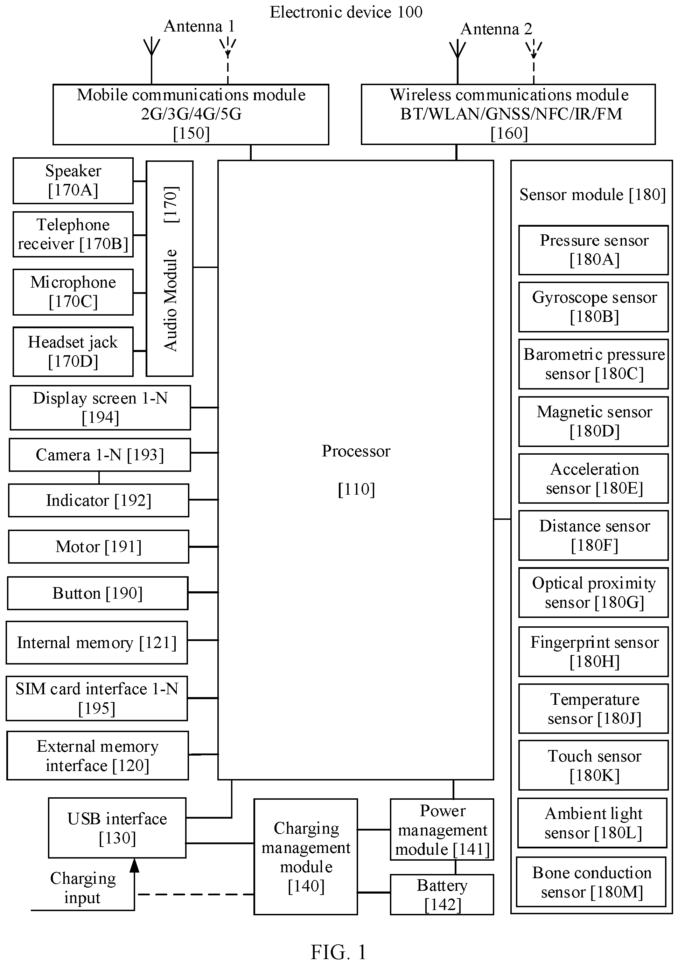

For example, FIG. 1 is a schematic structural diagram of an electronic device 100. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communications module 150, a wireless communications module 160, an audio module 170, a speaker 170A, a telephone receiver 170B, a microphone 170C, a headset jack 170D, a sensor module 180, a button 190, a motor 191, an indicator 192, a camera 193, a display screen 194, a subscriber identification module (subscriber identification module, SIM) card interface 195, and the like.

It can be understood that the structure illustrated in the embodiments of this application does not constitute a specific limitation on the electronic device 100. In some other embodiments of this application, the electronic device 100 may include more or fewer components than those shown in the figure, combine some components, split some components, or have different component arrangements. The illustrated components can be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors. In some embodiments, the electronic device 101 may alternatively include one or more processors 110. The controller can generate an operation control signal based on instruction operation code and a timing signal to complete control of fetching and executing an instruction. In some other embodiments, a memory may be further disposed in the processor 110 to store an instruction and data. For example, the memory in the processor 110 may be a cache memory. The memory can store an instruction or data that the processor 110 has just used or used cyclically. If the processor 110 needs to use the instruction or data again, the instruction or data can be directly invoked from the memory. This avoids repeated access and shortens a waiting time of the processor 110, thereby improving efficiency of processing data or executing an instruction by the electronic device 101.

In some embodiments, the processor 110 may include one or more interfaces. The interfaces may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a SIM card interface, and/or a USB interface. The USB interface 130 is an interface that complies with USB standard specifications, and may be specifically a Mini USB interface, a Micro USB interface, a USB Type C interface, or the like. The USB interface 130 can be configured to connect a charger to charge the electronic device 101, or can be configured to transmit data between the electronic device 101 and a peripheral device. The USB interface 130 can alternatively be configured to connect a headset and play audio through the headset.

It can be understood that the interface connection relationship between the modules illustrated in the embodiments of this application is merely an example for description, and does not constitute a limitation on the structure of the electronic device 100. In some other embodiments of this application, the electronic device 100 may alternatively use an interface connection mode that is different from those in the foregoing embodiments, or use a combination of a plurality of interface connection modes.

The charging management module 140 is configured to receive a charging input from the charger. The charger may be a wireless charger or a wired charger. In some embodiments of wired charging, the charging management module 140 can receive a charging input of the wired charger through the USB interface 130. In some embodiments of wireless charging, the charging management module 140 can receive a wireless charging input through a wireless charging coil of the electronic device 100. When charging the battery 142, the charging management module 140 can also supply power to the electronic device through the power management module 141 at the same time.

The power management module 141 is configured to connect the battery 142, the charging management module 140, and the processor 110. The power management module 141 receives an input from the battery 142 and/or the charging management module 140, and supplies power to the processor 110, the internal memory 121, the external memory, the display screen 194, the camera 193, the wireless communications module 160, and the like. The power management module 141 can be further configured to monitor parameters such as a battery capacity, battery recycling times, and a battery health status (leakage and impedance). In some other embodiments, the power management module 141 may alternatively be disposed in the processor 110. In some other embodiments, the power management module 141 and the charging management module 140 may alternatively be disposed in the same device.

The wireless communication function of the electronic device 100 can be implemented by the antenna 1, the antenna 2, the mobile communications module 150, the wireless communications module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas can be further multiplexed to improve antenna utilization. For example, the antenna 1 can be multiplexed as a diversity antenna of a wireless local area network. In some other embodiments, the antenna can be used in combination with a tuning switch.

The mobile communications module 150 can provide a wireless communication solution including 2G/3G/4G/5G and the like applied to the electronic device 100. The mobile communications module 150 may include at least one filter, at least one switch, at least one power amplifier, at least one low noise amplifier (low noise amplifier, LNA), and the like. The mobile communications module 150 can receive an electromagnetic wave through the antenna 1, perform processing such as filtering and amplifying on the received electromagnetic wave, and transmit the processed electromagnetic wave to the modem processor for demodulation. The mobile communications module 150 can further amplify a signal that is modulated by the modem processor, and the signal is converted into an electromagnetic wave and radiated by the antenna 1. In some embodiments, at least some functional modules of the mobile communications module 150 may be disposed in the processor 110. In some embodiments, at least some functional modules of the mobile communications module 150 and at least some modules of the processor 110 may be disposed in the same device.

The wireless communications module 160 can provide wireless communication solutions including a wireless local area network (wireless local area network, WLAN) (such as a wireless fidelity (wireless fidelity, Wi-Fi) network), Bluetooth (bluetooth, BT), a global navigation satellite system (global navigation satellite system, GNSS), frequency modulation (frequency modulation, FM), near field communication (near field communication, NFC), infrared (infrared, IR) and the like that are applied to the electronic device 100. The wireless communications module 160 may be one or more devices integrating at least one communication processing module. The wireless communications module 160 receives an electromagnetic wave through the antenna 2, performs processing of frequency modulation and filtering on the electromagnetic wave signal, and sends the processed signal to the processor 110. The wireless communications module 160 can further receive a to-be-sent signal from the processor 110, and perform frequency modulation and amplification on the signal. The signal is converted into an electromagnetic wave and radiated by the antenna 2.

The electronic device 100 implements a display function through the GPU, the display screen 194, the application processor, and the like. The GPU is an image processing microprocessor, which is connected to the display screen 194 and the application processor. The GPU is configured to perform mathematical and geometric calculations and is used for graphics rendering. The processor 110 may include one or more GPUs that execute program instructions to generate or change display information.

The display screen 194 is configured to display an image, a video, and the like. The display screen 194 includes a display panel. The display panel may use a liquid crystal display (liquid crystal display, LCD), an organic light-emitting diode (organic light-emitting diode, OLED), an active-matrix organic light-emitting diode (active-matrix organic light emitting diode, AMOLED), a flex light-emitting diode (flex light-emitting diode, FLED), Miniled, MicroLed, Micro-oLed, a quantum dot light-emitting diode (quantum dot light emitting diodes, QLED), and the like. In some embodiments, the electronic device 100 may include one or more display screens 194.

In some embodiments of this application, when the display panel is made of materials such as OLED, AMOLED, and FLED, the display screen 194 in FIG. 1 may be bent. Here, that the display screen 194 can be bent means that the display screen can be bent to any angle at any position, and can be maintained at the angle. For example, the display screen 194 can be folded in half left and right from the center, or can be folded in half up and down from the center. In this application, the display screen that can be bent is referred to as a foldable display screen. The touch display screen may be one screen or a display screen formed by splicing a plurality of screens, which is not limited herein.

The display screen 194 of the electronic device 100 may be a flexible screen. At present, the flexible screen has attracted much attention due to its unique characteristics and great potential. Compared with a conventional screen, the flexible screen features strong flexibility and bendability, and can provide users with new interaction manners that are based on the bendability characteristic, so as to meet more needs of the users for the electronic device. For an electronic device equipped with a foldable display screen, the foldable display screen on the electronic device can be switched between a small screen in a folded state and a large screen in an unfolded state at any time. Therefore, users use a screen splitting function on the electronic device equipped with a foldable display screen more frequently.

The electronic device 100 can implement a photographing function through the ISP, the camera 193, the video codec, the GPU, the display screen 194, the application processor, and the like.

The ISP is configured to process data fed back by the camera 193. For example, during photographing, a shutter is opened, light is transmitted to a photosensitive element of the camera through a lens, an optical signal is converted into an electrical signal, and the photosensitive element of the camera transfers the electrical signal to the ISP for processing, so that the electrical signal is converted into an image visible to a naked eye. The ISP can further optimize algorithms for noise, brightness, and a skin color of the image. The ISP can further optimize parameters such as exposure and color temperature of the photographing scene. In some embodiments, the ISP may be disposed in the camera 193.

The camera 193 is configured to capture a still image or a video. An optical image is generated for an object through the lens and is projected to the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transfers the electrical signal to the ISP. The ISP converts the electrical signal into a digital image signal. The ISP outputs the digital image signal to the DSP for processing. The DSP converts the digital image signal into an image signal in a standard format of RGB, YUV, or the like. In some embodiments, the electronic device 100 may include one or more cameras 193.

The digital signal processor is configured to process a digital signal. In addition to processing a digital image signal, the digital signal processor can further process another digital signal. For example, when the electronic device 100 selects a frequency, the digital signal processor is configured to perform Fourier transform or the like on energy of the frequency.

The video codec is configured to compress or decompress a digital video. The electronic device 100 can support one or more video codecs. In this way, the electronic device 100 can play or record videos in a plurality of encoding formats, such as moving picture experts group (moving picture experts group, MPEG)-1, MPEG-2, MPEG-3, and MPEG-4.

The NPU is a neural-network (neural-network, NN) computing processor. By referring to a structure of a biological neural network, such as a transfer mode between human brain neurons, the NPU quickly processes input information, and can further perform continuous self-learning. The NPU can implement applications such as intelligent cognition of the electronic device 100, for example, image recognition, face recognition, voice recognition, and text understanding.

The external memory interface 120 can be configured to connect an external storage card such as a Micro SD card, to expand a storage capacity of the electronic device 100. The external storage card communicates with the processor 110 through the external memory interface 120 to implement a data storage function. For example, music, video, and other files are stored in the external storage card.

The internal memory 121 can be configured to store one or more computer programs, and the one or more computer programs include instructions. The processor 110 can run the foregoing instructions stored in the internal memory 121 to enable the electronic device 101 to perform a screen-off display method provided in some embodiments of this application, as well as various applications, data processing, and the like. The internal memory 121 may include a program storage area and a data storage area. The program storage area can store an operating system. The program storage area can further store one or more applications (such as photo galleries and contacts), and so on. The data storage area can store data (such as photos and contacts) created during the use of the electronic device 101. In addition, the internal memory 121 may include a high-speed random access memory, and may further include a non-volatile memory, such as one or more magnetic disk storage components, flash memory components, universal flash storage (universal flash storage, UFS), and the like. In some embodiments, the processor 110 can run the instructions stored in the internal memory 121 and/or the instructions stored in the memory disposed in the processor 110, to enable the electronic device 101 to perform a screen-off display method provided in the embodiments of this application, as well as other applications, data processing, and the like. The electronic device 100 can implement the audio functions such as music playing and sound recording through the audio module 170, the speaker 170A, the telephone receiver 170B, the microphone 170C, the headset jack 170D, the application processor, and the like.

The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The pressure sensor 180A is configured to sense a pressure signal and can convert the pressure signal into an electrical signal. In some embodiments, the pressure sensor 180A may be disposed on the display screen 194. There are many types of pressure sensors 180A, such as a resistive pressure sensor, an inductive pressure sensor, and a capacitive pressure sensor. The capacitive pressure sensor may include at least two parallel plates with conductive material. When a force is applied to the pressure sensor 180A, capacitance between electrodes changes. The electronic device 100 determines intensity of the pressure based on the change in capacitance. When a touch operation is applied to the display screen 194, the electronic device 100 detects intensity of the touch operation based on the pressure sensor 180A. The electronic device 100 can further calculate a touch position based on the detection signal of the pressure sensor 180A. In some embodiments, touch operations that are applied to the same touch position but have different touch operation intensity may correspond to different operation instructions. For example, when a touch operation whose touch operation intensity is less than a first pressure threshold is applied to a short message application icon, an instruction for viewing a short message is executed. When a touch operation whose touch operation intensity is greater than or equal to the first pressure threshold is applied to the short message application icon, an instruction for creating a short message is executed.

The gyroscope sensor 180B can be configured to determine a movement posture of the electronic device 100. In some embodiments, the gyroscope sensor 180B can be configured to determine an angular velocities of the electronic device 100 around three axes (that is, X, Y, and Z axes). The gyroscope sensor 180B can be used for image stabilization. For example, when the shutter is pressed, the gyroscope sensor 180B detects a shake angle of the electronic device 100, calculates a distance that a lens module needs to compensate based on the angle, and allows the lens to counteract the shake of the electronic device 100 through reverse movement to implement image stabilization. The gyroscope sensor 180B can further be used for navigation and somatosensory game scenes.

The acceleration sensor 180E can detect magnitudes of acceleration of the electronic device 100 in various directions (generally three axes). When the electronic device 100 is still, a value and a direction of gravity may be detected. The acceleration sensor 180E can be further configured to identify the posture of the electronic device, and be used in applications such as switching between a landscape screen and a portrait screen, and a pedometer.

The ambient light sensor 180L is configured to sense brightness of ambient light. The electronic device 100 can adaptively adjust brightness of the display screen 194 based on the sensed brightness of the ambient light. The ambient light sensor 180L can be further configured to automatically adjust white balance during photographing. The ambient light sensor 180L can further cooperate with the optical proximity sensor 180G to detect whether the electronic device 100 is in a pocket, so as to prevent accidental touch.

The fingerprint sensor 180H is configured to collect a fingerprint. The electronic device 100 can use the collected fingerprint characteristics to implement fingerprint-based unlocking, application lock accessing, fingerprint-based photographing, fingerprint-based incoming call receiving, and the like.

The temperature sensor 180J is configured to detect a temperature. In some embodiments, the electronic device 100 executes a temperature processing policy by using the temperature detected by the temperature sensor 180J. For example, when the temperature reported by the temperature sensor 180J exceeds a threshold, the electronic device 100 degrades performance of a processor located near the temperature sensor 180J, so as to reduce power consumption and implement thermal protection. In some other embodiments, when the temperature is lower than another threshold, the electronic device 100 heats the battery 142 to avoid abnormal shutdown of the electronic device 100 caused by low temperature. In some other embodiments, when the temperature is lower than still another threshold, the electronic device 100 boosts an output voltage of the battery 142 to avoid abnormal shutdown caused by low temperature.

The touch sensor 180K is also called a "touch panel". The touch sensor 180K may be disposed on the display screen 194, and the touch sensor 180K and the display screen 194 form a touchscreen, which is also called a "touch-controlled screen". The touch sensor 180K is configured to detect a touch operation performed on or near the touch sensor 180K. The touch sensor can transfer a detected touch operation to the application processor to determine a type of a touch event. The display screen 194 can be configured to provide a visual output related to the touch operation. In some other embodiments, the touch sensor 180K may alternatively be disposed on a surface of the electronic device 100, which is different from the position of the display screen 194.

The button 190 includes a power-on button, a volume button, and the like. The button 190 may be a mechanical button, or a touch button. The electronic device 100 can receive a key input, and generate a key signal input related to user setting and function control of the electronic device 100.

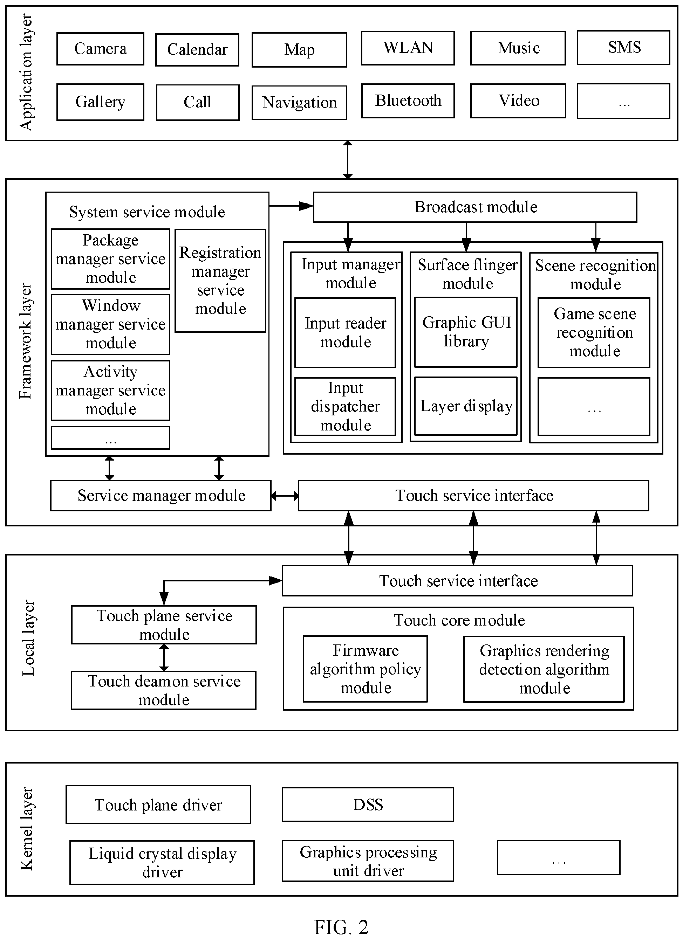

FIG. 2 is a structural block diagram of software of an electronic device 100 according to an embodiment of this application. A layered architecture divides the software into several layers, and each layer has a clear role and division of labor. Communication between layers is performed through a software interface. In some embodiments, the Android system is divided into four layers, which are respectively an application (application, App) layer, a framework (Framework) layer, a native (Native) layer, and a kernel (Kernel) layer from top to bottom. The application layer may include a series of application packages.

As shown in FIG. 2, the application package may include applications such as camera, gallery, calendar, call, map, navigation, WLAN, Bluetooth, music, video, and SMS.

The framework layer provides an application programming interface (application programming interface, API) and a programming framework for applications at the application layer. The application framework layer includes some predefined functions.

The framework layer includes a system service (system service) module, a broadcast (broadcast) module, a service manager (service manager) module, a touch service interface (touch service interface), an input manager (input manager) module, a surface flinger (surface flinger) module, and a scene recognition module.

The system service module includes a package manager service (package manager service) module, a window manager service (window manager service) module, an activity manager service (activity manager service) module, and a registration manager service module.

The input manager module includes an input reader (input reader) module and an input dispatcher (input dispatcher) module.

The surface flinger module includes a graphic GUI library (libgui) and a layer (layer) display module.

The scene recognition module includes a game scene recognition module and a temperature recognition module. The game scene recognition module is configured to recognize whether the current electronic device is in a game scene. For example, the scene recognition module further includes another scene recognition module, such as a social application recognition module, a stylus input recognition module, a gesture navigation recognition module, an in-vehicle mode recognition module, a handwriting input recognition module, or a stylus input recognition module.

The native layer includes a touch service interface, a touch core (touch core) module, a touch plane service (touch plane service, TP service) module, and a touch deamon service (touch deamon service) module.

The function of the touch service interface of the native layer is to transfer information to the touch service interface of the framework layer. For example, when the game scene recognition module of the framework layer recognizes that the current electronic device is in the game scene, the touch service interface of the framework layer transfers information that the electronic device is in the game scene to the touch service interface of the native layer, so that the touch core module of the native layer starts a corresponding algorithm.

The touch core module includes a firmware algorithm policy module and a graphics rendering detection algorithm module. The firmware algorithm policy module can be configured to adjust a sensitivity algorithm of the touchscreen in different scenes. The graphics rendering detection algorithm module is configured to determine, in different scenes, whether to perform queue jumping for a current rendering frame.

The kernel layer includes a touch plane driver (touch plane driver, TP driver), a liquid crystal display driver (liquid crystal display driver, LCD driver), a decision support system (decision support systems, DSS), and a graphics processing unit driver (graphics processing unit driver, GPU driver).

The technical solutions in the embodiments of this application provide an adaptive adjustment mechanism for a sensitivity algorithm of a touch plane (touch plane, TP) in different application scenes or based on different touch needs. In the touch panel firmware scheduling (touch panel firmware sched) thread shown in FIG. 2, the game scene recognition module in the scene recognition module of the framework layer can determine that the current electronic device is in the game scene, and notify the touch service window of the native layer through the touch service interface of the framework layer. The firmware algorithm policy module in the touch core module of the native layer performs adaptive algorithm adjustment based on the scene to meet algorithm adjustment for touch sensitivity in different scenes, thereby improving touch experience of the user in different scenes.

In an embodiment, the touch panel firmware sched thread may further include: the input manager module of the framework layer determines a user data model by obtaining various events (for example, click, slide, and double-click) of the user on the touchscreen, and notifies the native layer through the touch service interface. The firmware algorithm policy module in the touch core module of the native layer can set different touch sensitivity adjustment algorithms based on different data models, so as to meet algorithm adjustment for the touch sensitivity of different user operations in different scenes. This not only can meet different requirements of the user for touch experience in different scenes, but also can provide different touch experience for different operations in the same scene.

For example, in the game scene, a response speed of the electronic device for a user input is higher than a response speed in a common scene. In the game scene, for example, in a fierce battlefield scene, the input manager module can determine the user data model based on an action of the user on the touchscreen. For example, the user data model may be that the user shoots, opens the mirror, moves, and so on. For different user data models, the firmware algorithm policy module can perform different adaptive algorithm adjustments. For example, for the three operations of shooting, opening a mirror, and moving, the firmware algorithm policy module can configure different touch sensitivity algorithms. This helps improve the touch experience of the user in the game scene.

The technical solutions in the embodiments of this application further provide an intelligent recognition and detection mechanism for image rendering frames to reduce a hand-following display delay caused by frame queuing during layer composition performed by the SurfaceFlinger module.

In the existing solution, the touchscreen can only work with a specific stable and immutable sensitivity model. In the embodiments of this application, the electronic device can switch specific algorithm sensitivity and a working mode for different scenes, so that the touchscreen has different types of algorithm adjustment modes. Switching specific algorithm sensitivity and a working mode based on different applications or scenes helps meet specific needs of the user in the current application or scene, thereby improving intelligence of the device and improving interaction efficiency.

The application scenes in an example of this application may be divided into game scenes and non-game basic 2D scenes (which can be further subdivided into in-vehicle scenes, stylus scenes, and the like according to needs). For the recognition of the scene part, recognition of each scene is completed through each of the scene recognition modules. A scene recognition result is sent to the touch service interface of the native layer through the touch service interface of the framework layer. After getting a specific game scene and game load, the firmware algorithm policy module in the touch core module of the native layer adjusts related firmware algorithm sensitivity for a specific game, so as to run different touch sensitivity algorithms for different application scenes.

In an embodiment, scenes that may further be used in the embodiments of this application include but are not limited to the following: the electronic device enters the game scene, using an application (for example, Microblog), the user uses a stylus to input on the touchscreen, or the user uses gesture navigation. The electronic device can be configured with three or more sensitivity algorithms. For different scenes, the electronic device can use different sensitivity algorithms to meet the needs of the user in different scenes.

In an embodiment, the electronic device can alternatively be configured with different sensitivity algorithms in the same scene. For example, when the user is reading an e-book or using gesture navigation, the electronic device is configured with different sensitivity algorithms at different positions on the touchscreen, or can be configured with different sensitivity in different time periods, and so on.

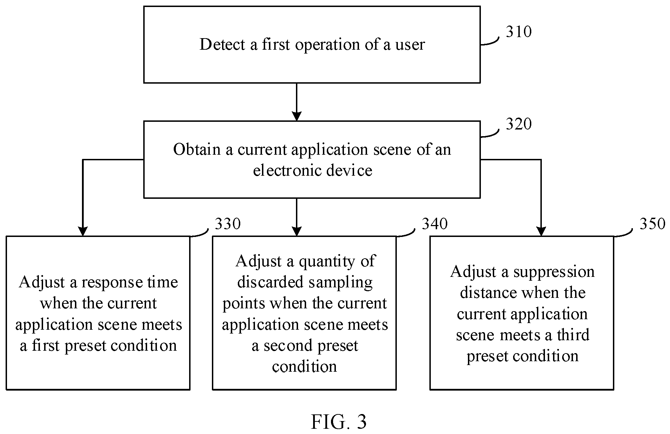

FIG. 3 is a schematic flowchart of a control method 300 according to an embodiment of this application. As shown in FIG. 3, the method 300 includes the following steps:
S310: The electronic device detects a first operation of a user.

The first operation may be any operation, that is, as long as a valid operation of the user is detected. The first operation may alternatively be a preset specific operation. For example, the first operation is a specific general operation, such as double-clicking, touching and holding, a pressure operation, a knuckle operation, or folding or unfolding the screen. The first operation may alternatively be a specific functional operation. Starting a specific function is used as an example. Other functions are similar to the function and details are omitted for simplicity. A specific function can be started by using a starting gesture (for example, drawing a C to start the phone APP function; drawing an E to start the email APP; touching and holding an icon and sliding to select a menu option to implement a specific function; and a folding operation on a foldable screen), by performing an operation of clicking an APP icon, or by performing an operation of switching the APP from the background to the foreground. Therefore, the first operation may be a starting gesture, an operation of clicking the APP icon, or a switching operation.

When the first operation is a specific functional operation, the first operation is an operation that enables the electronic device to enter a preset application scene, such as starting a game APP, entering a handwriting mode, entering a social application APP (such as Microblog), or entering an in-vehicle mode.

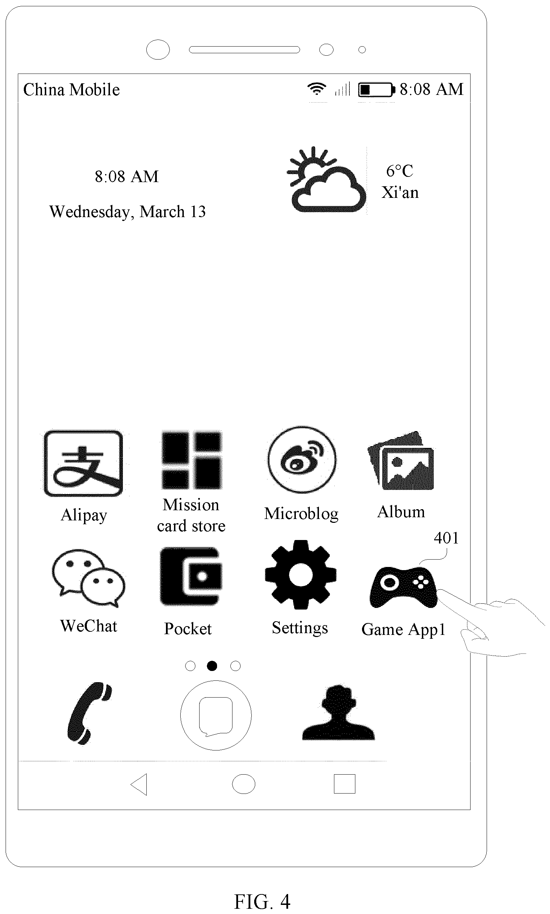

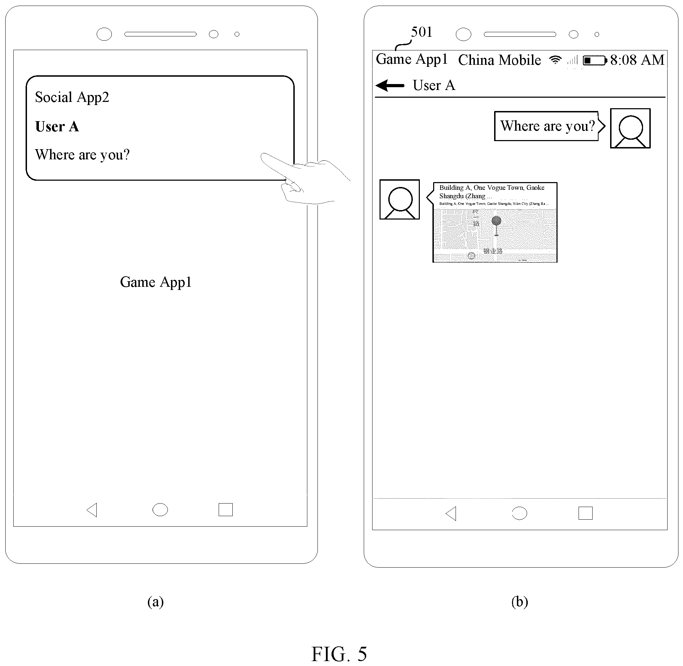

For example, as shown in FIG. 4, the first operation is an operation of the user for clicking an icon 401 of a game Appl on the desktop of the mobile phone. For another example, referring to FIG. 5(a) and FIG. 5(b), the user receives a chat message (FIG. 5(a)) sent by a social App2 when the user is playing the game Appl in a fierce battlefield game application, and then the user can click to enter the social App2 for chatting. After the chatting ends, the user can click "Game Appl" 501 in the upper left corner to re-enter the game application scene (FIG. 5(b)). The first operation is an operation of clicking "Game Appl" 501 in the upper left corner.

Optionally, the electronic device may determine whether the first operation is a specific functional operation based on software development kit (software development kit, SDK) interface information. Specifically,
the electronic device can obtain a correspondence between an SDK interface and an operation type, for example, by pre-storing a table of the correspondence in the electronic device, or can alternatively obtain the correspondence from another device such as a server or another storage device connected to the electronic device, or from a game vendor or a user. Each SDK interface may correspond to one operation type. For example, Table 1 shows a schematic diagram of a correspondence between an SDK interface and an operation type in a fierce battlefield.

**Table 1: Correspondence between an SDK interface and an operation type**

| SDK interface | Operation type |
|---|---|
| SDK interface 1 | User clicks "Start game" |
| SDK interface 2 | Open a mirror |
| SDK interface 3 | Shoot |
| SDK interface 4 | Move |
| SDK interface 5 | Skip |

When detecting a specific operation of the user (for example, a mirror opening operation), the electronic device can learn an operation type corresponding to this operation based on a message notification mechanism. The message notification mechanism is specifically as follows:

When the electronic device detects the operation of the user, the application layer sends a message to the scene recognition module of the framework layer. The message carries SDK interface information. The scene recognition module can determine the operation type corresponding to the operation based on the SDK interface information in the message.

For example, the game App scene may include a loading interface of the game App and a battle interface of the game App.

The electronic device can determine whether the first operation is a specific functional operation based on a load status of the current application scene.

For example, the current application scene is a game application scene, and the electronic device can determine whether the first operation is a specific functional operation based on central processing unit (central processing unit, CPU) usage of the game application in the current electronic device.

In an embodiment, the load status of the current application scene can alternatively be determined based on CPU usage and GPU usage.

For example, in the loading interface of the game App, the CPU usage of the game App is low; in the battle interface of the game App, the CPU usage of the game App is high; and a time when the electronic device detects that the user clicks to start the game is a moment at which the CPU usage and load of the game App are highest.

When it is detected that the CPU usage of the game App is within a first CPU usage threshold range [a, b], it can be determined that the user operation is the operation corresponding to the loading interface of the game App; when it is detected that the CPU usage of the game App is within a second CPU usage threshold range [c, d], it can be determined that the user operation is the operation corresponding to the battle interface of the game App. When it is detected that the CPU usage of the game App exceeds a third CPU usage threshold, it can be determined that the user operation is an operation of clicking to start the game.

For example, the first CPU usage threshold range is [10%, 20%], the second CPU usage threshold range is [30%, 50%], and the third CPU usage threshold is 60%.

S320: Obtain a current application scene of the electronic device in response to the first operation.

For example, after the electronic device detects that the user clicks an icon of a specific game App on the desktop of the electronic device, the game APP is started, the interface of the game APP is displayed, and the electronic device enters the game scene. Specifically, when the electronic device detects that the user clicks an icon of a specific game App (for example, Strike of Kings) on the desktop of the electronic device, the game App at the application layer sends a number (for example, a process identifier (process identifier, PID)) corresponding to the game App and a process name corresponding to the game App to the system service module of the framework layer. The system service module can determine, based on the number and the process name, which App is started. For example, by determining the process identifier and the process name of the game App, the electronic device determines that the game App is started. In the embodiments of this application, because the scene recognition module and the system service module are integrated into the framework layer, after the system service module determines that the game App is started, the scene recognition module can determine, based on the information that the game App is started, that the current electronic device enters the game application scene.

Optionally, the electronic device can determine the current application scene based on an attribute of an application currently running in the foreground. For example, Microblog is running in the current foreground, and it can be determined that the current application scene is a social scene based on the attribute of Microblog, that is, a social APP.

The firmware algorithm policy module receives a notification from the scene recognition module and performs one or more steps of S330, S340, or S350.

S330: The electronic device adjusts a response time for a touchscreen to enter an idle (idle) mode when determining that the current application scene meets the first preset condition.

In the embodiments of this application, the first preset condition includes but is not limited to:
(1) the current application scene is a preset application scene;
(2) the current application scene is a preset application scene, and the message corresponding to the first operation includes preset interface information; and
(3) the current application scene is a preset application scene, and the CPU usage of the current application scene is within the preset CPU usage range.

For example, the preset application scene may be at least one of the following scenes: a game application scene, a gesture navigation scene, an in-vehicle scene, a social application scene, a gesture input scene, a stylus input scene, a voice call scene, a contact scene, and the like.

For example, the first preset condition is that the current application scene is a game application scene. When determining that the current application scene is a game application scene, the electronic device can determine the response time as a first time.

For example, the first preset condition is that the current application is a social application scene. When determining that the current application scene is a social application scene, the electronic device can determine the response time as a second time. The first time is different from the second time.

For example, the first preset condition is that the current application scene is a game application scene, and the message corresponding to the first operation includes information about the SDK interface 1. When determining that the current application scene is a game social application scene, and the first operation is an operation of the user for clicking "Start game", the electronic device determines the response time as a third time.

For example, the first preset condition is that the current application scene is a game application scene, and the message corresponding to the first operation includes information about the SDK interface 2. When determining that the current application scene is a game social application scene, and the first operation is a mirror opening operation, the electronic device determines the response time as a fourth time. The third time is different from the fourth time.

For example, for the operation corresponding to the preset interface information, refer to Table 1. For example, the electronic device adjusts the response time for the touchscreen to enter the idle mode when detecting that the user is in a game scene and detecting the mirror opening operation of the user.

For example, the electronic device adjusts the response time for the touchscreen to enter the idle mode when detecting that the user is in a game scene and detecting an operation on the loading interface of the game (for example, detecting that the CPU usage of the game App is within the first CPU usage threshold range [a, b]).

In an embodiment of this application, the response time for the touchscreen to enter the idle mode may be adjusted from a default value to the response time in the current application scene. For example, the default response time is Is. When the electronic device is determined to be in a game scene, the response time may be adjusted from Is to 60s. For example, when the electronic device is determined to be in a social application scene, the response may be adjusted from Is to 10s.

In another embodiment of this application, the electronic device can be configured with different response times for different application scenes, for example, a response time configured for the desktop of the electronic device is Is; a response time configured for the game application scene is 60s; and a response time configured for the social application scene is 10s.

To resolve the touch delay problem, the prior art uses a method for increasing a sampling frequency of the touchscreen. For example, the current mainstream sampling frequency is 120 Hz. The increase in the sampling frequency leads to an increase in power consumption of the Touch Panel IC. To resolve the power consumption problem, the touchscreen provides a sampling scan mode with low power consumption, and the firmware of the touchscreen is initially in an idle mode (for example, the sampling frequency may be 60 Hz/30 Hz). When the user touches the screen, and after the touchscreen detects that the finger is on the screen, the firmware is in an active (activity) mode (for example, the sampling frequency may be 120 Hz). At present, the existing touchscreen enters the idle mode when no touch operation is detected within Is. The idle mode is mainly characterized in that the touchscreen performs sampling at 60 Hz. Switching to data sampling at 120 Hz is performed only when an external touch event is detected. In the game scene, especially in a battle scene with a high real-time requirement, if the touchscreen has always been switched from the idle mode to the active mode, there is a data delay of approximately 8 ms on the touchscreen. This affects hand-following performance of the game.

In the solution in the embodiments of this application, for example, the scene is divided into a game scene and a non-game scene. When the electronic device is in a non-game scene, timing starts from a moment at which no operation of touching the screen by the user is detected. If the electronic device does not detect the user's touch on the display screen within continuous first duration, the firmware of the touchscreen switches from the active mode to the idle mode.

In the solution in the embodiments of this application, for example, when the electronic device determines that in the game application scene, the response time for the touchscreen to enter the idle mode is automatically switched from current (default) preset duration to the first duration, that is, timing starts from a moment at which the user does not touch the screen after the screen touching, and if the electronic device does not detect the user's touch on the display screen within continuous first duration, the firmware of the touchscreen switches from the active mode to the idle mode.

For example, when the electronic device is determined to be in the game application scene and detects that the user clicks to start the game, the electronic device automatically adjusts the response time for the touchscreen to enter the idle mode from the (default) preset duration to the first duration. For example, the (default) preset duration is Is, and the first duration is 60s. That the electronic device detects that the user clicks to start the game can be determined based on the SDK interface information or the load status of the game application. For the determining process, refer to the description in S310. For brevity, details are not described herein again.

It should be understood that the foregoing description is only given by using the game scene and the non-game scene as examples, and the classification of scenes is not limited in the embodiments of this application. For example, scenes can alternatively be divided into a game scene, a scene in which a user browses a specific social App, and another scene. In different scenes, the electronic device can be configured with different response times for entering the idle mode.

It should be further understood that, in the embodiments of this application, the electronic device can alternatively be configured with different response times for entering the idle state in different areas of the touchscreen in the same scene. For example, in a scene in which the user is reading an e-book, it is considered that the user's need for turning a page is the most frequent and most important operation, and most of the page turning operations occur in the lower half of the display area. Therefore, different response duration for entering the idle state can be configured for the upper half area and the lower half area of the touchscreen. For example, the response duration of the lower half area is configured to be longer than that of the upper half area. Certainly, the operating area may alternatively be divided in another manner according to another standard, and different parameters are applied to different areas.

In the embodiments of this application, when determining that the electronic device is in a specific scene, the electronic device can automatically adjust the response time for the touchscreen to enter the idle mode from the active mode. This helps improve user experience in this scene, improve intelligence of interaction, improve efficiency, reduce user operations, and reduce the user's learning costs.

S340: The electronic device adjusts a quantity of discarded sampling points when determining that the current application scene meets a second preset condition. In the embodiments of this application, the second preset condition includes but is not limited to:
(1) the current application scene is a preset application scene;
(2) the current application scene is a preset application scene, and the message corresponding to the first operation includes preset interface information; and
(3) the current application scene is a preset application scene, and the CPU usage of the current application scene is within the preset CPU usage range.

The existing TP algorithm internally buffers reported points to further confirm that the reported points are real and not caused by noise. When detecting that the user performs a touch operation on the touchscreen, the electronic device collects sampling points. For example, the electronic device collects three sampling points. The electronic device may discard the first sampling point and start calculation from the second sampling point. The discarding of a sampling point causes the electronic device to skip responding to partial data of the user's touch, thereby delaying the response of the electronic device to the user's operation.

For example, the second preset condition is that the current application scene is a game application scene. When determining that the current application scene is a game application scene, the electronic device determines a quantity of discarded sampling points as a first quantity.

For example, the second preset condition is that the current application scene is a social application scene. When determining that the current application scene is a game social application scene, the electronic device determines a quantity of discarded sampling points as a second quantity. The first quantity is different from the second quantity.

For example, the second preset condition is that the current application scene is a game application scene, and the message corresponding to the first operation includes information about the SDK interface 1. When determining that the current application scene is a game social application scene, and the first operation is an operation of the user for clicking "Start game", the electronic device determines a quantity of discarded sampling points as a third quantity.

For example, the second preset condition is that the current application scene is a game application scene, and the message corresponding to the first operation includes information about the SDK interface 2. When determining that the current application scene is a game social application scene, and the first operation is a mirror opening operation, the electronic device determines a quantity of discarded sampling points as a fourth quantity. The third quantity is different from the fourth quantity.

In the embodiments of this application, when the electronic device is determined to be in some scenes (for example, game scenes), the electronic device can automatically reduce the quantity of discarded sampling points, or does not discard a sampling point, that is, adjusts the quantity of discarded sampling points as the first quantity, where the first quantity is an integer. This shortens a buffer time of the user's touch, shortens a response delay to the user's operation, and improves a response speed of the electronic device.

S350: The electronic device disables a click-to-slide suppression algorithm or shortens a suppression distance in the click-to-slide suppression algorithm when determining that the current application scene meets a third preset condition.

In the embodiments of this application, the third preset condition includes but is not limited to:
(1) the current application scene is a preset application scene;
(2) the current application scene is a preset application scene, and the message corresponding to the first operation includes preset interface information; and
(3) the current application scene is a preset application scene, and the CPU usage of the current application scene is within the preset CPU usage range.

In the prior art, to avoid click-to-slide and jitter in some scenes, the electronic device inhibits the reporting of touch data for a small distance (for example, 0.5 mm) moved by the user on the touchscreen, thereby preventing the click operation from being recognized as a sliding operation. However, for some scenes (for example, movement of mirror opening in a fierce battlefield game), the user's movement of mirror opening corresponds to a small distance of movement. This movement is a real sliding operation rather than a click operation. However, when the click-to-slide suppression algorithm is used, the sliding operation is recognized as a click operation. As a result, this user operation is incorrectly recognized by the electronic device. In the embodiments of this application, for a preset specific scene, the electronic device can automatically disable the click-to-slide algorithm, or automatically shorten the suppression distance in the click-to-slide algorithm (for example, the suppression distance is shortened from the original 0.5 mm to 0.1 mm). This helps improve response accuracy and reduce a false recognition rate.

For example, the third preset condition is that the current application scene is a game application scene. When determining that the current application scene is a game application scene, the electronic device can determine the suppression distance as a first distance.

For example, the third preset condition is that the current application is a social application scene. When determining that the current application scene is a social application scene, the electronic device can determine the suppression distance as a second distance. The first distance is different from the second distance.

For example, the third preset condition is that the current application scene is a game application scene, and the message corresponding to the first operation includes information about the SDK interface 1. When determining that the current application scene is a game social application scene, and the first operation is an operation of the user for clicking "Start game", the electronic device can determine the suppression distance as a third distance.

For example, the third preset condition is that the current application scene is a game application scene, and the message corresponding to the first operation includes information about the SDK interface 2. When determining that the current application scene is a game social application scene, and the first operation is a mirror opening operation, the electronic device can determine the suppression distance as a fourth distance. The third distance is different from the fourth distance.

It should be understood that, in the embodiments of this application, there is no actual sequence among S320, S330, and S340.

It should be further understood that, in the embodiments of this application, when the electronic device is determined to be in a specific application scene, the electronic device can perform one or more steps of S330, S340, and S350.

For example, when the electronic device detects that the user clicks the icon of the game application on the desktop of the electronic device, it can be determined that the electronic device is in the game application scene. At this time, the electronic device can enter the loading interface of the game. In this case, the electronic device determines that the current application scene of the electronic device is the game scene, and can automatically increase the response time for the touchscreen to enter the idle mode from the active mode. When the electronic device detects the user's operation of clicking to start the game on the loading interface of the game, the electronic device enters the battle interface of the game. When determining that the operation meets the preset condition, the electronic device can automatically reduce the quantity of discarded sampling points. When the electronic device detects a specific (touch) operation (for example, a click-to-view operation in a fierce battlefield) of the user that meets the preset condition in the battle interface of the game, the electronic device can automatically disable the click-to-slide suppression algorithm, or shorten the suppression distance in the click-to-slide suppression algorithm.

In the embodiments of this application, the trigger conditions for adjusting different parameters (the response time, the quantity of discarded sampling points, or the suppression distance) may be the same or different. For example, when detecting that the user clicks the icon of the game App on the desktop of the electronic device, the electronic device can adjust various parameters at the same time. For another example, the electronic device adjusts different parameters only after detecting different operations of the user.

Google has added triple buffering (triple buffering) to the graphics pipeline since Android 4.1, and introduced vertical synchronization (vertical synchronization, Vsync) for rendering synchronization, so that the application user interface (AppUI) and SurfaceFlinger can work based on the VSync rhythm generated by the hardware, making actions such as scrolling and page turning more consistent and smoother. In addition, Google has considered data queuing for completing GPU rendering (GPU Rending) from the rendering thread (renderthread), and provided only a system-level mechanism for the SurfaceFlinger to rewrite layers.

Triple buffering refers to the application rendering buffer (app rending buffer), the surface flinger buffer (surface flinger buffer), and the display buffer.

The triple buffering mechanism provides a system-level mechanism for the SurfaceFlinger to rewrite layers. However, because there is no real-time detection and intelligent recognition mechanism, the frame (frame) queuing of the application rendering buffer causes a hand-following delay of one vertical synchronization cycle. For example, for a 60 Hz display system solution, one vertical synchronization cycle is 16.67 ms. In some specific scenes, there may be a specific delay from the user's touch to displaying a response result by the touchscreen.

According to the technical solutions in the embodiments of this application, the hand-following delay caused by the frame queuing of the GPU Rending layer in the triple buffering mechanism system can be solved.

In the current electronic device, the triple buffering mechanism is used to enhance overall fluency of the system, but the overall hand-following performance is not optimized and there is no related optimization policy. In the embodiments of this application, end-to-end analysis can be mainly performed in the graphics rendering and display process to optimize the hand-following part.

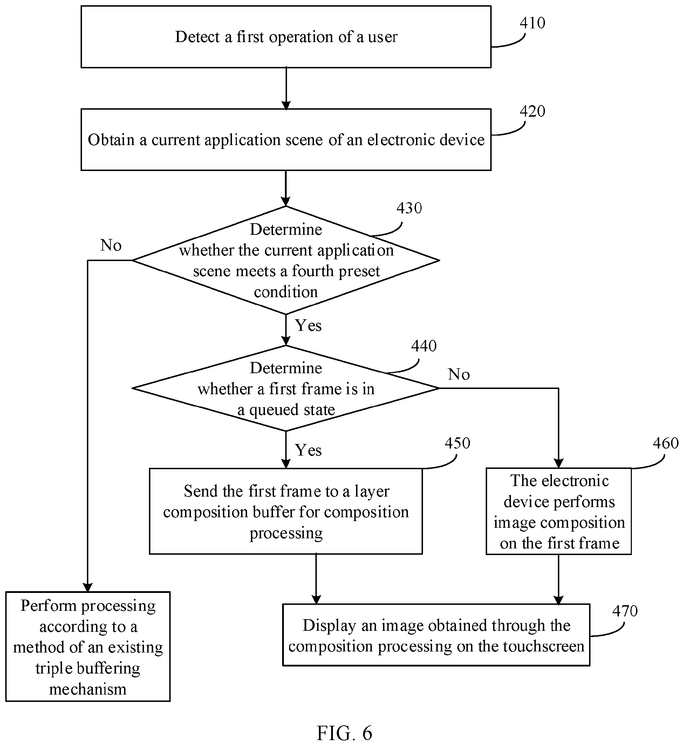

FIG. 6 is a schematic flowchart of a control method 400 according to an embodiment of this application. As shown in FIG. 6, the method 400 includes the following steps:
S410: The electronic device detects a first operation of a user.
S420: The electronic device obtains a current application scene of the electronic device in response to the first operation.

It should be understood that, for the processes of S410 and S420, refer to S310 and S320 in the foregoing method 300. For brevity, details are not described herein again.

For example, the scene recognition module recognizes a game scene. When it is recognized that the game is running in the foreground, the touch core module of the native layer is notified through the touch service interface of the framework layer and the touch service interface of the native layer.

S430: The electronic device determines whether the current application scene meets a fourth preset condition.

In the embodiments of this application, the fourth preset condition includes but is not limited to:
(1) the current application scene is a preset application scene;
(2) the current application scene is a preset application scene, and the message corresponding to the first operation includes preset interface information; and
(3) the current application scene is a preset application scene, and the CPU usage of the current application scene is within the preset CPU usage range.

For example, the preset application scene may be at least one of the following scenes: a game application scene, gesture navigation, an in-vehicle scene, or a social application scene; the preset application scene is a handwriting input or a stylus input.

S440: If the electronic device determines that the current scene meets the fourth preset condition, the electronic device may continue to determine whether a first frame in an application rendering buffer queue corresponding to the first operation is in a queued state.

Otherwise, if the electronic device determines that the current scene does not meet the sixth preset condition, the electronic device performs processing according to the prior art.

It should be understood that, for the interface information and load determining, refer to the foregoing method 300. For brevity, details are not described herein again.

S450: If the electronic device determines that the first frame is in the queued state, the electronic device sends the first frame to a layer composition buffer for composition processing. That is, queue jumping is performed for the first frame, so that the first frame directly enters the hardware composer HWC for composition.

S460: If the first frame is not in the queued state, the electronic device may perform processing according to the prior art, that is, directly compose the first frame.

The touch core module performs algorithm enabling detection on the graphics rendering detection algorithm module based on a scene message, so as to determine whether the current first frame is in the queued state.

If it is detected that there is a queued state, and the first frame in the application rendering buffer queue corresponding to a user operation model (user portrait) needs to jump the queue, the first frame is directly sent to the hardware composer HWC for composition. This achieves an effect of quickly displaying graphics without waiting.

The input manager module of the framework layer determines the user operation model (user portrait or user operation model) by obtaining various events of the user on the touchscreen (for example, one-handed click, two-handed click, one-handed sliding, two-handed sliding, double-click, gentle press, hard press, and press and hold).

If there is no queued state for the first frame, the processing is performed according to the prior art.

S470: The electronic device displays an image obtained through the composition processing.

The electronic device determines whether the first frame is directly used for composition (or whether the first frame is in a queued state). When the algorithm threshold condition is reached (for example, it is detected that the current application scene meets the preset conditions, and the first frame is not directly used for composition (the first frame is in the queued state)), a touch event is triggered to perform direct composition on the first frame through the hardware composer (hardware composer, HWC) module, helping avoid the hand-following delay caused by the queued composition of the first frame.

It should be understood that, in the embodiments of this application, the layer composition buffer can also be understood as an HWC module, and the image composition buffer can be used for graphics composition in two ways. One way is GPU composition, and the other way is DSS composition.

For example, in a fierce battlefield, after the electronic device detects an operation of the user for clicking the shooting control, the electronic device can determine that a rendering frame corresponding to the clicking of the shooting control is used for composition and displaying bullets. At this time, the electronic device determines whether the rendering frame is in the queued state. If the rendering frame is in the queued state, the surface flinger (surface flinger) module can perform queue jumping for the rendering frame in this case, and compose the rendering frame in advance for display. This can avoid the hand-following delay between clicking the shooting control by the user and displaying the bullets, thereby improving the response speed of the electronic device for the user operation, and improving the user's touch experience in the game scene.

For example, in the Microblog application, when the electronic device detects the user's sliding operation (which may be sliding-left, sliding-right, sliding-up, sliding-down, or the like), the electronic device can determine whether the first frame that reaches the sliding threshold in the current buffer queue is in the queued state. If the first frame is in the queued state, the surface flinger module can perform queue jumping for the rendering frame, and compose the rendering frame in advance for display. This can avoid the hand-following delay between the user's sliding on the touchscreen and seeing the interface sliding, and improve the user's touch experience in the social application scene.

It should be understood that in the embodiments of this application, if the first frame is not in the queued state, the surface flinger module performs direct composition and displays the graphics obtained after the composition immediately on the touchscreen; if the first frame is in the queued state, the surface flinger module needs to wait for the previous frame of the first frame to be composed before composing the first frame. This may cause a hand-following delay of one vertical synchronization (vertical synchronization, vsync) cycle (for example, 16.67 ms). In this case, if queue jumping is performed for the first frame, that is, the first frame is composed first, this helps avoid the hand-following delay, thereby increasing the graphics display speed and improving the user's touch experience.

In the embodiments of this application, when the preset condition is met, the specific rendering frame jumps the queue and is composed. This can solve the data delay of the rendering frame without directly performing hardware composition (HWC), and ensure that information about some frames of a graphics stack is refreshed and sent for display in a timely manner.

In an embodiment of this application, when it is detected that the application scene of the current foreground application is a preset application scene, a plurality of system parameters are adjusted to adapt to the current application scene and improve the intelligence of interaction. For example, when the electronic device detects the user's operation for starting the game APP, for example, clicking the icon of the game App on the desktop of the electronic device, the electronic device can determine to enter the game App application scene. In this case, the electronic device can adjust the response time for the touchscreen to enter the idle mode, adjust the quantity of discarded sampling points, and adjust the suppression distance in the click-to-slide algorithm. Further optionally, if the first frame in the application rendering buffer queue is in a queued state at this time, the first frame may be sent to a layer composition buffer for composition processing, and the image obtained after the composition is displayed.

It should be understood that the method 300 and the method 400 in the embodiments of this application can be both used to improve the user's touch experience, or only the method 300 or the method 400 can be used to improve user experience. There may be no actual sequence between the method 300 and the method 400.

By applying the embodiments of this application, for example, in a fierce battlefield scene, the time for bullets to appear when the shooting button is clicked without opening the mirror can be shortened; the time for opening the mirror can alternatively be shortened; or the time for a person to move to the right or to the left can alternatively be shortened. For another example, in the Strike of Kings, the time from clicking a skill by the user to applying the skill can be shortened; the time for person movement can alternatively be shortened; or the time for changing the direction of the skill can alternatively be shortened.

It can be understood that, to implement the foregoing functions, the electronic device includes a corresponding hardware and/or software module for performing each of the functions. With reference to algorithm steps of each example described in the embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art can use different methods to implement the described functions for each particular application with reference to the embodiments, but it should not be considered that the implementation goes beyond the scope of this application.

In the embodiments of this application, the electronic device may be divided into functional modules based on the foregoing method examples. For example, each functional module may be obtained through division for a corresponding function, or two or more functions may be integrated into one processing module. The foregoing integrated module may be implemented in a form of hardware. It should be noted that module division in the embodiments of this application is an example and is merely logical function division. During actual implementation, there may be another division manner.

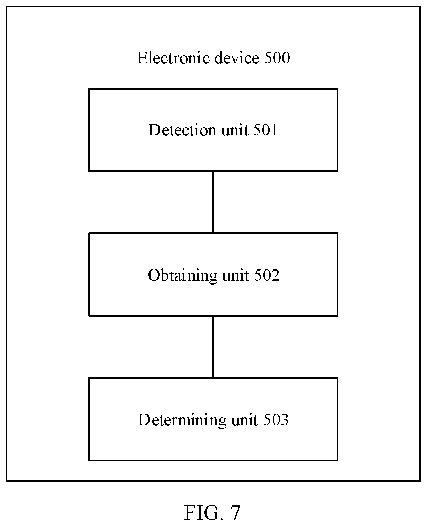

When each functional module is obtained through division based on each corresponding function, FIG. 7 is a possible schematic composition diagram of an electronic device 500 in the foregoing embodiments. As shown in FIG. 7, the electronic device 500 may include a detection unit 501, an obtaining unit 502, and a determining unit 503.

The detection unit 501 can be configured to support the electronic device 500 in performing the foregoing steps 310 and 410, and the like, and/or be used for another process of the technology described in this specification.

The obtaining unit 502 can be configured to support the electronic device 500 in performing the foregoing steps 320 and 420, and the like, and/or be used for another process of the technology described in this specification.

The determining unit 503 can be configured to support the electronic device 500 in performing the foregoing steps 330, S340, S350, and the like, and/or be used for another process of the technology described in this specification.

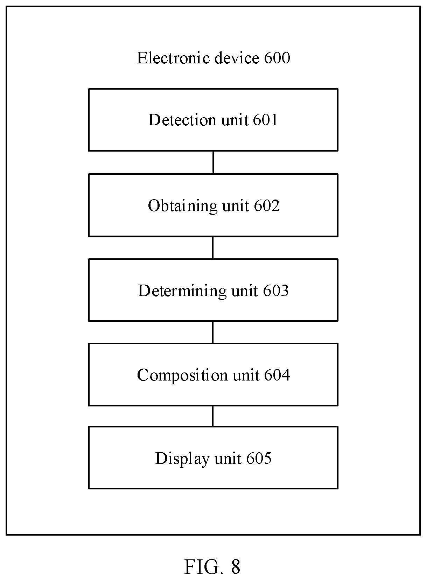

FIG. 8 is a possible schematic composition diagram of an electronic device 600 in the foregoing embodiments. As shown in FIG. 8, the electronic device 600 may include a detection unit 601, an obtaining unit 602, a determining unit 603, a composition unit 604, and a display unit 605.

The detection unit 601 can be configured to support the electronic device 600 in performing the foregoing step 410, and the like, and/or be used for another process of the technology described in this specification.

The obtaining unit 602 can be configured to support the electronic device 600 in performing the foregoing step 420, and the like, and/or be used for another process of the technology described in this specification.

The determining unit 603 can be configured to support the electronic device 600 in performing the foregoing step S430 or S440, and the like, and/or be used for another process of the technology described in this specification.

The composition unit 604 can be configured to support the electronic device 600 in performing the foregoing step S450 or 460, and the like, and/or be used for another process of the technology described in this specification.

The display unit 605 can be configured to support the electronic device 600 in performing the foregoing step S470, and the like, and/or be used for another process of the technology described in this specification.

It should be noted that all related content of steps in the foregoing method embodiments may be cited in function descriptions of corresponding functional modules. Details are not described herein again.

The electronic device provided in the embodiments of this application is configured to perform the foregoing control method, so that an effect same as that in the foregoing implementation method can be achieved.

When an integrated unit is used, the electronic device may include a processing module, a storage module, and a communications module. The processing module can be configured to control and manage the actions of the electronic device, for example, can be configured to support the electronic device in performing the steps performed by the foregoing units. The storage module can be configured to support the electronic device in storing program code and data, and the like. The communications module can be configured to support communication between the electronic device and another device.

The processing module may be a processor or a controller. The processing module can implement or execute various example logical blocks, modules, and circuits described with reference to content disclosed in this application. Alternatively, the processor may be a combination for implementing a computing function, for example, a combination of one or more microprocessors or a combination of a digital signal processing (digital signal processing, DSP) and a microprocessor. The storage module may be a memory. The communications module may be specifically a device such as a radio frequency circuit, a Bluetooth chip, or a Wi-Fi chip that interacts with another electronic device.

In an embodiment, when the processing module is a processor and the storage module is a memory, the electronic device in this embodiment may be a device having the structure shown in FIG. 1.

An embodiment of this application further provides a computer storage medium. The computer storage medium stores a computer instruction, and when the computer instruction runs on an electronic device, the electronic device is enabled to perform the foregoing related method steps to implement the control method in the foregoing embodiments.

An embodiment of this application further provides a computer program product. When the computer program product runs on a computer, the computer is enabled to perform the foregoing related steps to implement the control method in the foregoing embodiments.

In addition, an embodiment of this application further provides an apparatus. The apparatus may be specifically a chip, a component, or a module. The apparatus may include a processor and a memory that are connected to each other. The memory is configured to store a computer-executable instruction. When the apparatus runs, the processor can execute the computer-executable instruction stored in the memory, so that the chip performs the control methods in the foregoing method embodiments.

The electronic device, the computer storage medium, and the computer program product or the chip provided in the embodiments of this application are all configured to perform the corresponding methods provided above. Therefore, for beneficial effects that can be achieved by the electronic device, the computer storage medium, and the computer program product or the chip, refer to beneficial effects of the corresponding methods provided above. Details are not described herein again.

The foregoing descriptions about implementations allow a person skilled in the art to understand that, for the purpose of convenient and brief description, division of the foregoing functional modules is used only as an example for illustration. In actual application, the foregoing functions can be allocated to different functional modules and implemented according to needs, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the module or unit division is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed in different places. Some or all of the units may be selected depending on actual needs to achieve the purposes of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software function unit.

When the integrated unit is implemented in the form of a software function unit and sold or used as an independent product, the integrated unit may be stored in a readable storage medium. Based on such an understanding, the technical solutions in the embodiments of this application essentially, or the part contributing to the prior art, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in the embodiments of this application. The foregoing storage medium includes any medium that can store program code, for example, a USB flash drive, a removable hard disk, a read-only memory (read only memory, ROM), a random access memory (random access memory, RAM), a magnetic disk, or an optional disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A control method, applied to an electronic device, wherein the electronic device comprises a touchscreen, and the method comprises:
detecting a first operation of a user;
obtaining a current application scene of the electronic device in response to the first operation;
determining a response time as a first time when determining that the application scene meets a first preset condition, wherein the response time is a response time for the touchscreen to enter an idle mode from an active mode; and/or determining a quantity of discarded sampling points as a first quantity when determining that the application scene meets a second preset condition, wherein the discarded sampling point is a sampling point discarded when the electronic device performs sampling on the touchscreen; and
determining the response time as a second time when determining that the application scene meets a third preset condition; and/or determining the quantity of discarded sampling points as a second quantity when determining that the application scene meets a fourth preset condition, wherein
the first time is different from the second time, the first quantity is different from the second quantity, the first preset condition is different from the third preset condition, and the second preset condition is different from the fourth preset condition.

2. The method according to claim 1, wherein the method further comprises:
determining a suppression distance as a first distance when determining that the current application scene meets a fifth preset condition, wherein the suppression distance is a suppression distance in a click-to-slide suppression algorithm; and
determining the suppression distance as a second distance when determining that the current application scene meets a sixth preset condition, wherein
the fifth preset condition is different from the sixth preset condition, and the first distance is different from the second distance.

3. The method according to claim 1 or 2, wherein the first preset condition is the same as the second preset condition, and the first preset condition comprises:
the current application scene is at least one of the following scenes: a game application scene, gesture navigation, an in-vehicle scene, a social application scene, a voice call scene, handwriting input, or stylus input.

4. The method according to claim 3, wherein the first preset condition and the second preset condition are that the application scene is a game application scene, and the third preset condition and the fourth preset condition are that when the application scene is not a game application scene, the first time is greater than the second time, and the first quantity is less than the second quantity.

5. The method according to claim 1 or 2, wherein the first preset condition comprises that the current application scene is a preset application scene, and a message corresponding to the first operation comprises first preset interface information;
the second preset condition comprises that the current application scene is the preset application scene, and the message corresponding to the first operation comprises second preset interface information, wherein
the first preset interface information is different from the second preset interface information.

6. The method according to any one of claims 1 to 5, wherein the first operation is an operation, detected by the electronic device, of clicking an application icon by the user on a desktop of the electronic device; or
the first operation is an operation of the user for indicating to switch to the application scene.

7. The method according to any one of claims 1 to 6, wherein the electronic device is an electronic device configured with an Android triple buffering mechanism, and the method further comprises:
in response to determining that the current application scene meets a seventh preset condition, and a first frame in an application rendering buffer queue is in a queued state, wherein the first frame is a frame corresponding to the first operation,
sending the first frame to a layer composition buffer for composition processing; and
displaying an image obtained through the composition processing.

8. A control method, applied to an electronic device configured with an Android triple buffering mechanism, wherein the electronic device comprises a display, and the method comprises:
detecting a first operation of a user;
obtaining a current application scene of the electronic device in response to the first operation;
in response to determining that the application scene meets a preset condition, and a first frame in an application rendering buffer queue is in a queued state, wherein the first frame is a frame corresponding to the first operation,
sending the first frame to a layer composition buffer for composition processing; and
displaying an image obtained through the composition processing on the touchscreen.

9. The method according to claim 8, wherein the preset condition comprises:
the current application scene is at least one of the following scenes: a game application scene, gesture navigation, an in-vehicle scene, a social application scene, a voice call scene, handwriting input, or stylus input.

10. An electronic device, comprising: a touchscreen; one or more processors; a memory; a plurality of application programs; and one or more programs, wherein the one or more programs are stored in the memory, and when the one or more programs are executed by the processor, the electronic device is enabled to perform the following steps:
detecting a first operation of a user;
obtaining a current application scene of the electronic device in response to the first operation;
determining a response time as a first time when determining that the application scene meets a first preset condition, wherein the response time is a response time for the touchscreen to enter an idle mode from an active mode; and/or adjusting a quantity of discarded sampling points as a first quantity when determining that the application scene meets a second preset condition, wherein the discarded sampling point is a sampling point discarded when the electronic device performs sampling on the touchscreen; and
determining the response time as a second time when determining that the application scene meets a third preset condition; and/or determining the quantity of discarded sampling points as a second quantity when determining that the application scene meets a fourth preset condition, wherein
the first time is different from the second time, the first quantity is different from the second quantity, the first preset condition is different from the third preset condition, and the second preset condition is different from the fourth preset condition.

11. The electronic device according to claim 10, wherein when the one or more programs are executed by the processor, the electronic device is enabled to perform the following steps:
determining a suppression distance as a first distance when determining that the current application scene meets a fifth preset condition, wherein the suppression distance is a suppression distance in a click-to-slide suppression algorithm; and
determining the suppression distance as a second distance when determining that the current application scene meets a sixth preset condition, wherein
the fifth preset condition is different from the sixth preset condition, and the first distance is different from the second distance.

12. The electronic device according to claim 10 or 11, wherein the first preset condition is the same as the second preset condition, and the first preset condition comprises:
the current application scene is at least one of the following scenes: a game application scene, gesture navigation, an in-vehicle scene, a social application scene, a voice call scene, handwriting input, or stylus input.

13. The electronic device according to claim 12, wherein the first preset condition and the second preset condition are that the application scene is a game application scene, and the third preset condition and the fourth preset condition are that when the application scene is not a game application scene, the first time is greater than the second time, and the first quantity is less than the second quantity.

14. The electronic device according to claim 10 or 11, wherein the first preset condition comprises that the current application scene is a preset application scene, and a message corresponding to the first operation comprises first preset interface information;
the second preset condition comprises that the current application scene is the preset application scene, and the message corresponding to the first operation comprises second preset interface information, wherein
the first preset interface information is different from the second preset interface information.

15. The electronic device according to any one of claims 10 to 14, wherein the first operation is an operation, detected by the electronic device, of clicking an application icon by the user on a desktop of the electronic device; or
the first operation is an operation of the user for indicating to switch to the application scene.

16. The electronic device according to any one of claims 10 to 14, wherein the electronic device is an electronic device configured with an Android triple buffering mechanism, and when the one or more programs are executed by the processor, the electronic device is enabled to perform the following steps:
in response to determining that the current application scene meets a seventh preset condition, and a first frame in an application rendering buffer queue is in a queued state, wherein the first frame is a frame corresponding to the first operation,
sending the first frame to a layer composition buffer for composition processing; and
displaying an image obtained through the composition processing.

17. An electronic device, comprising: a touchscreen; one or more processors; a memory; a plurality of application programs; and one or more programs, wherein the one or more programs are stored in the memory, and when the one or more programs are executed by the processor, the electronic device is enabled to perform the following steps:
detecting a first operation of a user;
obtaining a current application scene of the electronic device in response to the first operation;
in response to determining that the application scene meets a preset condition, and a first frame in an application rendering buffer queue is in a queued state, wherein the first frame is a frame corresponding to the first operation,
sending the first frame to a layer composition buffer for composition processing; and
displaying an image obtained through the composition processing on the touchscreen.

18. The electronic device according to claim 17, wherein the preset condition comprises:
the current application scene is at least one of the following scenes: a game application scene, gesture navigation, an in-vehicle scene, a social application scene, a voice call scene, handwriting input, or stylus input.

19. A computer storage medium, comprising a computer instruction, wherein when the computer instruction runs on an electronic device, the electronic device is enabled to perform the control method according to any one of claims 1 to 9.

20. A computer program product, wherein when the computer program product runs on a computer, the computer is enabled to perform the control method according to any one of claims 1 to 9.
